# EUROPEAN PATENT APPLICATION

(11) **EP 4 564 873 A1**
(43) Date of publication of application: **04.06.2025**
(21) Application number: 23896368.0
(22) Date of filing: 30.10.2023
(51) Int. Cl.: H04W 12/06

(54) **COMMUNICATION METHOD AND ELECTRONIC DEVICE**

(30) Priority: 28.11.2022 CN 202211500568
(71) Applicant: Huawei Technologies Co., Ltd., Shenzhen, Guangdong 518129 (CN)
(72) Inventor: FANG, Xiwen, Shenzhen, Guangdong 518129 (CN); PAN, Shiran, Shenzhen, Guangdong 518129 (CN); LI, Changting, Shenzhen, Guangdong 518129 (CN)
(74) Representative: Thun, Clemens
(86) International application number: PCT/CN2023/127604
(87) International publication number: WO 2024/114214

(57) **Abstract**

This application provides a communication method and an electronic device. The method is applied to a first electronic device A first application is installed on the first electronic device. When communicating with a second electronic device through the first application, the first electronic device determines whether the second electronic device is authenticated by the first electronic device. If the second electronic device is not authenticated by the first electronic device, the first electronic device authenticates the second electronic device in a first authentication manner, or if the second electronic device has been authenticated by the first electronic device, the first electronic device authenticates the second electronic device in a second authentication manner. Time consumed for the first authentication manner is greater than time consumed for the second authentication manner, so that after completing one time of identity authentication, the first electronic device and the second electronic device may initiate a plurality of times of communication based on an authentication result obtained this time, and identity authentication does not need to be performed for a plurality of times, thereby reducing time consumed for the plurality of times of identity authentication, and improving communication efficiency.

## Description

This application claims priority to Chinese Patent Application No. 202211500568.0, filed with the China National Intellectual Property Administration on November 28, 2022 and entitled "COMMUNICATION METHOD AND ELECTRONIC DEVICE", which is incorporated herein by reference in its entirety.

### TECHNICAL FIELD

This application relates to the field of electronic devices, and more specifically, to a communication method and an electronic device.

### BACKGROUND

With development of technologies, more electronic devices are used in all scenarios, and different electronic devices have different software and hardware features. Two or more electronic devices usually need to operate together or cooperatively to perform some tasks. To ensure that electronic devices are not eavesdropped on or attacked when a distributed service is performed between the electronic devices, the electronic devices may encrypt data at an application layer, and then send encrypted data to another electronic device through a communication channel. In an encryption process, identity authentication and key negotiation need to be performed between the electronic devices. However, the foregoing process is for only a single service. When communication is initiated for a plurality of services, the electronic devices need to perform identity authentication and key negotiation for a plurality of times. Consequently, long time is consumed, and communication efficiency is low.

### SUMMARY

This application provides a communication method and an electronic device. A trusted relationship may be established between electronic devices. After identity authentication is completed between the electronic devices, when a plurality of applications within a trusted relationship range initiate communication, after completing one time of identity authentication, the electronic devices may initiate a plurality of times of communication based on one authentication result, and identity authentication does not need to be performed for a plurality of times, so that a communication delay can be reduced, and communication efficiency can be improved.

According to a first aspect, a communication method is provided. The method is applied to a first electronic device, and a first application is installed on the first electronic device. The method includes: detecting selection of a second electronic device on a first interface of the first application; the first electronic device sends a first communication request to the second electronic device through the first application, and determines whether the second electronic device is authenticated by the first electronic device in response to the selection; and if the second electronic device is not authenticated by the first electronic device, the first electronic device authenticates the second electronic device in a first authentication manner; or if the second electronic device has been authenticated by the first electronic device, the first electronic device authenticates the second electronic device in a second authentication manner, where time consumed for the first authentication manner is greater than time consumed for the second authentication manner.

In this embodiment of this application, when communicating with the second electronic device, the first electronic device may select different authentication manners based on whether the second electronic device is authenticated by the first electronic device. When the second electronic device has been authenticated, the first electronic device may use an authentication manner that consumes short time, so that a communication delay can be reduced, and communication efficiency can be improved. Especially in a plurality of times of identity authentication subsequently, more time is saved.

With reference to the first aspect, in some implementations of the first aspect, that the first electronic device authenticates the second electronic device in a second authentication manner includes: A second application is installed on the first electronic device, and when the first electronic device sends a second communication request to the second electronic device through the second application, the first electronic device authenticates the second electronic device in the second authentication manner.

With reference to the first aspect, in some implementations of the first aspect, before the detecting selection of a second electronic device on a first interface of the first application, the method includes: The first electronic device configures a first trusted relationship at a first time point, where the first electronic device is associated with the second electronic device based on the first trusted relationship.

With reference to the first aspect, in some implementations of the first aspect, that the first electronic device is associated with the second electronic device includes: The first electronic device and the second electronic device log in to a same first account; or the first electronic device and the second electronic device log in to two different accounts that belong to a same group; or the first electronic device and the second electronic device are in a one-to-one binding relationship.

With reference to the first aspect, in some implementations of the first aspect, the first application is associated with the second application based on the first trusted relationship.

With reference to the first aspect, in some implementations of the first aspect, a third application is installed on the first electronic device, and the first application is not associated with the third application based on the first trusted relationship; and when the first electronic device sends a third communication request to the second electronic device through the third application, the first electronic device authenticates the second electronic device in the first authentication manner.

With reference to the first aspect, in some implementations of the first aspect, that the first electronic device sends a first communication request to the second electronic device through the first application, and determines whether the second electronic device is authenticated by the first electronic device in response to the selection includes: The first electronic device sends the first communication request to the second electronic device through the first application, and determines, within first duration starting from the first time point, whether the second electronic device is authenticated by the first electronic device in response to the selection.

With reference to the first aspect, in some implementations of the first aspect, the first authentication manner includes first session key negotiation and identity authentication, the second authentication manner includes second session key negotiation but does not include identity authentication, and time consumed for the second session key negotiation is less than time consumed for the first session key negotiation.

With reference to the first aspect, in some implementations of the first aspect, the first session key negotiation generates a first session master key, the second session key negotiation generates a second session key, and the second session key is a derived key derived from the first session master key.

With reference to the first aspect, in some implementations of the first aspect, the first application and the second application both log in to a same second account.

According to a second aspect, a communication method is provided. The method is applied to a second electronic device. The method includes: receiving a first communication request from a first electronic device, where the first communication request is associated with a first application; in response to the first communication request, determining whether the second electronic device is authenticated by the first electronic device; and if the second electronic device is not authenticated by the first electronic device, the second electronic device accepts authentication of the first electronic device in a first authentication manner; or if the second electronic device has been authenticated by the first electronic device, the second electronic device accepts authentication of the first electronic device in a second authentication manner, where time consumed for the first authentication manner is greater than time consumed for the second authentication manner.

In this embodiment of this application, when communicating with the second electronic device, the first electronic device may select different authentication manners based on whether the second electronic device is authenticated by the first electronic device. When the second electronic device has been authenticated, the first electronic device may use an authentication manner that consumes short time, so that a communication delay can be reduced, and communication efficiency can be improved. Especially in a plurality of times of identity authentication subsequently, more time is saved.

With reference to the second aspect, in some implementations of the second aspect, the receiving a first communication request from a first electronic device includes: The first application of the second electronic device receives the first communication request; or a second application of the second electronic device receives the first communication request.

With reference to the second aspect, in some implementations of the second aspect, that the second electronic device accepts authentication of the first electronic device in a second authentication manner includes: receiving a second communication request from the first electronic device, where the second electronic device accepts authentication of the first electronic device in the second authentication manner, and the second communication request is associated with the second application.

With reference to the second aspect, in some implementations of the second aspect, the method further includes: receiving, at a first time point, a first trusted relationship configured by the first electronic device, where the first electronic device is associated with the second electronic device based on the first trusted relationship.

With reference to the second aspect, in some implementations of the second aspect, that the first electronic device is associated with the second electronic device includes: The first electronic device and the second electronic device log in to a same first account; or the first electronic device and the second electronic device log in to two different accounts that belong to a same group; or the first electronic device and the second electronic device are in a one-to-one binding relationship.

With reference to the second aspect, in some implementations of the second aspect, the first application is associated with the second application based on the first trusted relationship.

With reference to the second aspect, in some implementations of the second aspect, the first application is not associated with a third application based on the first trusted relationship; and the method further includes: receiving a third communication request from the first electronic device, where the second electronic device accepts authentication of the first electronic device in the first authentication manner, and the third communication request is associated with the third application.

With reference to the second aspect, in some implementations of the second aspect, the first authentication manner includes first session key negotiation and identity authentication, the second authentication manner includes second session key negotiation but does not include identity authentication, and time consumed for the second session key negotiation is less than time consumed for the first session key negotiation.

With reference to the second aspect, in some implementations of the second aspect, the first session key negotiation generates a first session master key, the second session key negotiation generates a second session key, and the second session key is a derived key derived from the first session master key.

With reference to the second aspect, in some implementations of the second aspect, the first application and the second application both log in to a same second account.

According to a third aspect, an electronic device is provided. The electronic device includes modules/units that perform the method according to any one of the foregoing aspects or the possible designs of the foregoing aspects. These modules/units may be implemented by hardware, or may be implemented by hardware executing corresponding software.

According to a fourth aspect, a chip is provided. The chip is coupled to a memory in an electronic device, and is configured to invoke a computer program stored in the memory and perform the technical solutions according to any one of the foregoing aspects and the possible designs of the foregoing aspects in embodiments of this application. In embodiments of this application, "coupling" means that two components are directly or indirectly combined with each other.

According to a fifth aspect, a computer-readable storage medium is provided. The computer-readable storage medium includes a computer program. When the computer program is run on an electronic device, the electronic device is enabled to perform the technical solutions according to any one of the foregoing aspects and the possible designs of the foregoing aspects.

According to a sixth aspect, a computer program is provided. The computer program includes instructions. When the instructions are run on a computer, the computer is enabled to perform the technical solutions according to any one of the foregoing aspects and the possible designs of the foregoing aspects.

According to a seventh aspect, an electronic device is provided. The electronic device includes at least one processor and at least one memory. The at least one memory stores at least one computer program, and the at least one computer program includes instructions. When the instructions are executed by the at least one processor, any one of the foregoing aspects or the possible implementations of the foregoing aspects is performed.

According to an eighth aspect, a communication system is provided. The communication system includes a first electronic device and a second electronic device. The first electronic device is configured to perform the method according to any one of the first aspect and the possible implementations of the first aspect, and the second electronic device is configured to perform the method according to any one of the second aspect and the possible implementations of the second aspect.

According to a ninth aspect, a computer program product is provided. When the computer program product is run on a computer, the computer is enabled to perform the method according to any one of the foregoing aspects and the possible designs of the foregoing aspects.

For beneficial effect of the second aspect to the ninth aspect, refer to beneficial effect of the first aspect. Details are not described again.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3 is a diagram of communication interaction of an electronic device;
FIG. 4 is a schematic flowchart of a communication method according to an embodiment of this application;
FIG. 5(a) and FIG. 5(b) show a group of graphical user interfaces (graphical user interfaces, GUIs) according to an embodiment of this application;
FIG. 6 is a schematic flowchart of a method for configuring a trusted relationship by an electronic device according to an embodiment of this application;
FIG. 7(a) and FIG. 7(b) show another group of GUIs according to an embodiment of this application;
FIG. 8 is a schematic flowchart of a communication method according to an embodiment of this application;
FIG. 9A and FIG. 9B are a schematic flowchart of a communication method according to an embodiment of this application; and
FIG. 10(a), FIG. 10(b), and FIG. 10(c) show another group of GUIs according to an embodiment of this application.

### DESCRIPTION OF EMBODIMENTS

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expression forms, for example, "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" usually indicates an "or" relationship between the associated objects.

Reference to "an embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

The following describes an electronic device, and embodiments for using such an electronic device. In some embodiments, the electronic device may be a portable electronic device that further includes another function such as a personal digital assistant function and/or a music player function, for example, a mobile phone, a tablet computer, or a wearable electronic device (for example, a smartwatch) having a wireless communication function. An example embodiment of the portable electronic device includes but is not limited to a portable electronic device using iOS^{®}, Android^{®}, Microsoft^{®}, or another operating system. The portable electronic device may alternatively be another portable electronic device, for example, a laptop (Laptop). It should be further understood that, in some other embodiments, the foregoing electronic device may not be the portable electronic device but a desktop computer.

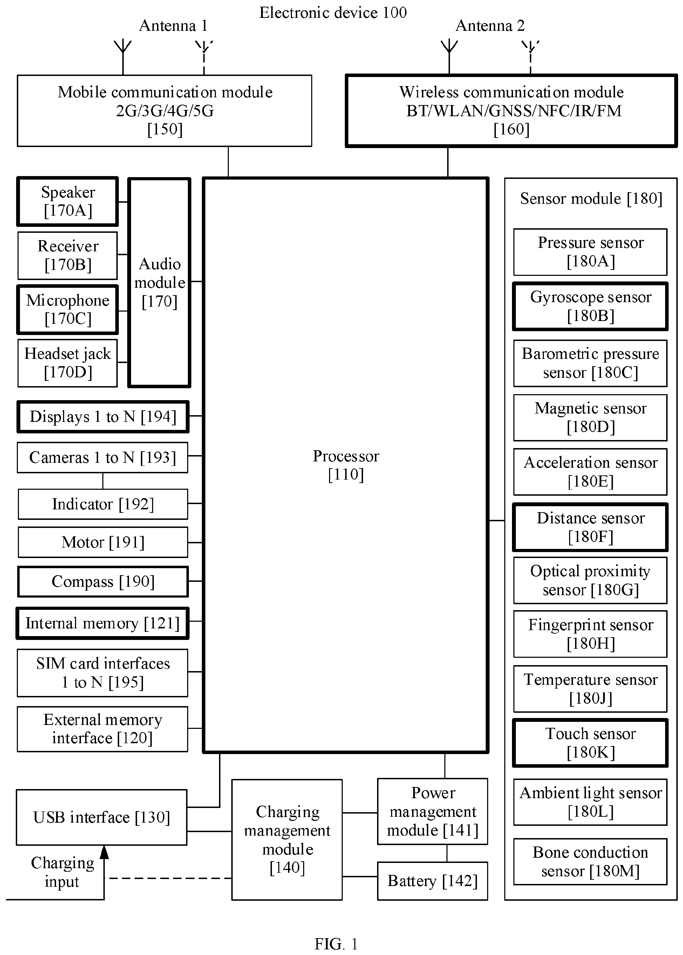

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display 194, a subscriber identity module (subscriber identity module, SIM) card interface 195, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or there may be a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the electronic device 100 may alternatively include one or more processors 110. The controller may generate an operation control signal based on instruction operation code and a time sequence signal, to complete control of instruction fetching and instruction execution. In some other embodiments, a memory may be further disposed in the processor 110, to store instructions and data. For example, the memory in the processor 110 may be a cache. The memory may store instructions or data that have/has been used or cyclically used by the processor 110. If the processor 110 needs to use the instructions or data again, the instructions or the data may be directly invoked from the memory. This avoids repeated access and reduces waiting time of the processor 110, thereby improving data processing or instruction execution efficiency of the electronic device 100.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 130 is an interface that conforms to a USB standard specification, and may be specifically a mini USB interface, a micro USB interface, a USB type-C interface, or the like. The USB interface 130 may be configured to be connected to a charger to charge the electronic device 100, or may be configured to transmit data between the electronic device 100 and a peripheral device. The USB interface 130 may alternatively be configured to be connected to a headset, and play audio through the headset.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to be connected to the battery 142, the charging management module 140, and the processor 110. The power management module 141 receives an input of the battery 142 and/or the charging management module 140, to supply power to the processor 110, the internal memory 121, the external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antennas may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function through the GPU, the display 194, the application processor, and the like. The GPU is a microprocessor for image processing, and is connected to the display 194 and the application processor. The GPU is configured to perform mathematical and geometric computation for graphic rendering. The processor 110 may include one or more GPUs that execute program instructions to generate or change displayed information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or more displays 194.

In some embodiments of this application, the display 194 in FIG. 1 is foldable when the display panel is made of a material such as an OLED, an AMOLED, or an FLED. Herein, that the display 194 is foldable means that the display may be folded to any angle at any part, and may be maintained at the angle. For example, the display 194 may be folded left and right from the middle, or may be folded up and down from the middle.

The display 194 of the electronic device 100 may be a flexible screen. Currently, the flexible screen attracts much attention due to unique features and huge potential of the flexible screen. Compared with a conventional screen, the flexible screen has features of strong flexibility and foldability, and can provide a user with a new foldability-based interaction mode, to meet more requirements of the user on the electronic device. For an electronic device configured with a foldable display, the foldable display of the electronic device may be switched between a small screen in a folded form and a large screen in an unfolded form at any time. Therefore, the user uses a split-screen function more frequently on the electronic device provided with the foldable display.

The electronic device 100 can implement a photographing function through the ISP, the camera 193, the video codec, the GPU, the display 194, the application processor, and the like.

The ISP is configured to process data fed back by the camera 193. For example, during photographing, a shutter is opened, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and a skin color of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more types of video codecs. Therefore, the electronic device 100 may play or record videos in a plurality of coding formats, for example, moving picture experts group (moving picture experts group, MPEG)-1, MPEG-2, MPEG-3, MPEG-4, and the like.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100, for example, image recognition, facial recognition, voice recognition, and text understanding, may be implemented through the NPU.

The external memory interface 120 may be used to be connected to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store one or more computer programs. The one or more computer programs include instructions. The processor 110 may run the instructions stored in the internal memory 121, so that the electronic device 100 performs the method provided in some embodiments of this application, various applications, data processing, and the like. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 100, and the like. In addition, the internal memory 121 may include a high-speed random access memory, or may include a non-volatile memory, for example, one or more magnetic disk storage devices, a flash memory, or a universal flash storage (universal flash storage, UFS). In some embodiments, the processor 110 may run the instructions stored in the internal memory 121 and/or the instructions stored in the memory that is disposed in the processor 110, to enable the electronic device 100 to perform the method provided in embodiments of this application, other applications, and data processing. The electronic device 100 may implement an audio function, for example, music playing or recording, through the audio module 170, the speaker 170A, the receiver 170B, the microphone 170C, the headset jack 170D, the application processor, and the like.

The sensor module 180 may include a pressure sensor 180A, a gyroscope sensor 180B, a barometric pressure sensor 180C, a magnetic sensor 180D, an acceleration sensor 180F, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an application icon of Messages, an instruction for viewing an SMS message is executed. When a touch operation whose touch operation intensity is greater than or equal to the first pressure threshold is performed on the application icon of Messages, an instruction for creating a new SMS message is executed.

The gyroscope sensor 180B may be configured to determine a motion posture of the electronic device 100. In some embodiments, angular velocities of the electronic device 100 around three axes (namely, axes X, Y, and Z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The acceleration sensor 180E may detect accelerations of the electronic device 100 in various directions (usually on three axes). When the electronic device 100 is still, a magnitude and a direction of gravity may be detected. The acceleration sensor 580E may be further configured to identify a posture of the electronic device, and is used in an application such as switching between a landscape mode and a portrait mode or a pedometer.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption and implement thermal protection. In some other embodiments, when the temperature is lower than another threshold, the electronic device 100 heats the battery 142 to avoid abnormal shutdown of the electronic device 100 due to a low temperature. In some other embodiments, when the temperature is lower than still another threshold, the electronic device 100 boosts an output voltage of the battery 142 to avoid abnormal shutdown due to a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from that of the display 194.

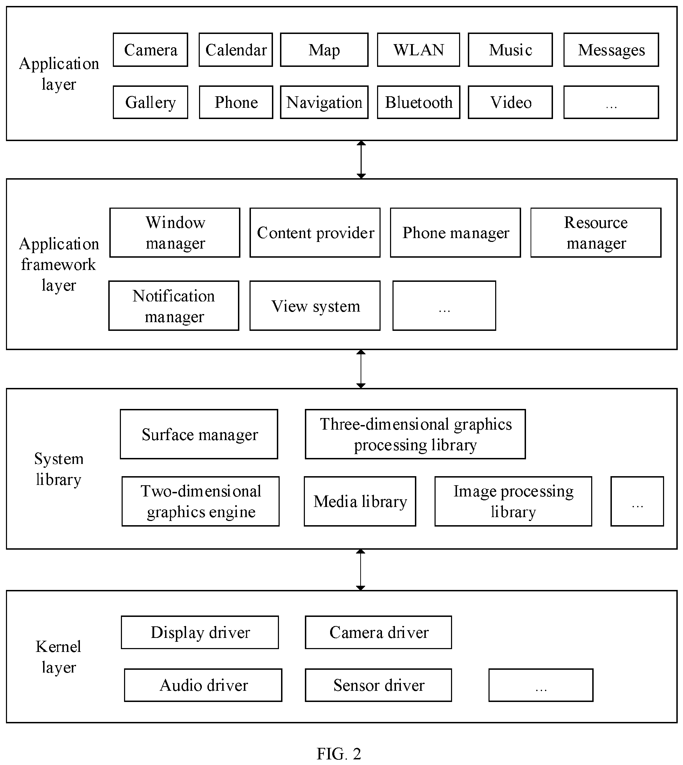

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer. The application layer may include a series of application packages.

As shown in FIG. 2, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer, and the application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to store and obtain data, and enable the data to be accessed by an application. The data may include a video, an image, audio, dialed and answered calls, a browsing history and bookmarks, an address book, and the like.

The view system includes visual controls, for example, a control for displaying a text and a control for displaying a picture. The view system may be configured to construct an application. A display interface may include one or more views. For example, a display interface including a notification icon of Messages may include a view for displaying a text and a view for displaying a picture.

The phone manager is configured to provide a communication function for the electronic device 100, for example, management of a call status (including answering, hanging up, or the like).

The resource manager provides various resources for an application, such as a localized character string, an icon, an image, a layout file, and a video file.

The notification manager enables an application to display notification information in the status bar, and may be configured to transmit a notification-type message. The displayed information may automatically disappear after a short pause without user interaction. For example, the notification manager is configured to notify download completion, provide a message notification, and the like. The notification manager may alternatively be a notification that appears in a top status bar of the system in a form of a graph or a scroll bar text, for example, a notification of an application running on a background or a notification that appears on a screen in a form of a dialog window. For example, text information is displayed in the status bar, an announcement is given, the electronic device vibrates, or an indicator light flashes.

The system library may include a plurality of functional modules, for example, a surface manager (surface manager), a media library (media library), a three-dimensional graphics processing library (for example, OpenGL ES), 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

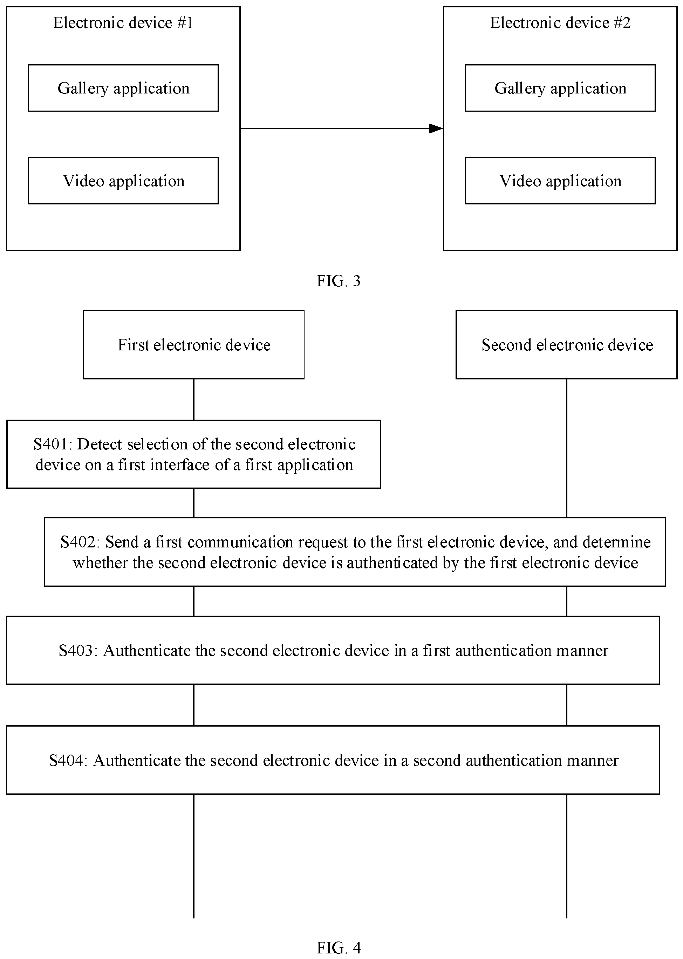

With development of technologies, more electronic devices are used in all scenarios, and different electronic devices have different software and hardware features. Two or more electronic devices usually need to operate together or cooperatively to perform some tasks, for example, screen projection, sensor scheduling across electronic devices, and file/picture sharing. The tasks are also referred to as inter-device services or distributed services. To ensure that electronic devices are not eavesdropped on or attacked when a distributed service is performed between the electronic devices, the electronic devices may encrypt data at an application layer, and then send the encrypted data to another electronic device through a communication channel. As shown in FIG. 3, a specific process is as follows:
An electronic device #1 and an electronic device #2 include gallery applications and video applications. The gallery application in the electronic device #1 sends a picture to the electronic device #2, and the gallery application in the electronic device #1 may perform encryption processing on the sent picture by using a session key.

For example, the electronic device #1 and the electronic device #2 log in to a same account, and servers corresponding to the electronic device #1 and the electronic device #2 may allocate identity credentials to the electronic device #1 and the electronic device #2. The identity credentials of the electronic device #1 and the electronic device #2 may be symmetric keys or asymmetric keys. When the gallery application needs to send a picture to the electronic device #2, first, the electronic device #1 and the electronic device #2 need to perform identity authentication based on the identity credentials and generate a session key #1 through negotiation, and then the gallery application in the electronic device #1 encrypts the picture by using the session key #1.

The electronic device #1 may send the encrypted picture to the electronic device #2 through a communication channel. The communication channel may be a Wi-Fi channel, a Bluetooth channel, or the like.

After the electronic device #2 receives the encrypted picture sent by the electronic device #1, the gallery application of the electronic device #2 may decrypt the encrypted picture by using the session key #1, so that the electronic device #1 and the electronic device #2 complete picture transmission.

When the gallery application in the electronic device #1 encrypts the picture by using the session key #1 and sends the encrypted picture to the electronic device #2, the video application in the electronic device #1 also initiates sending of a video to the electronic device #2. In this case, the electronic device #1 and the electronic device #2 still need to perform identity authentication based on the identity credentials and generate a session key #2 through negotiation. Then, the video application in the electronic device #1 encrypts the video by using the session key #2, and sends the encrypted video to the electronic device #2.

It may be learned from the foregoing descriptions that, when the electronic device #1 and the electronic device #2 perform the distributed service, the electronic device #1 and the electronic device #2 may perform identity authentication and negotiate the session key to ensure communication security. However, the session key is for only a single service and cannot be reused for another service, and when the another service also initiates a communication requirement, the electronic device #1 and the electronic device #2 need to perform re-authentication and negotiate a session key. Consequently, long time is consumed, and communication efficiency is low. Based on this, embodiments of this application provide a communication method, and provide two authentication manners, so that an electronic device does not need to repeatedly perform identity authentication for a plurality of times during communication. This can reduce a communication delay, and improve communication efficiency.

FIG. 4 is a schematic flowchart of a communication method 400 according to an embodiment of this application. As shown in FIG. 4, the method 400 includes the following steps.

S401: A first electronic device detects selection of a second electronic device on a first interface of a first application.

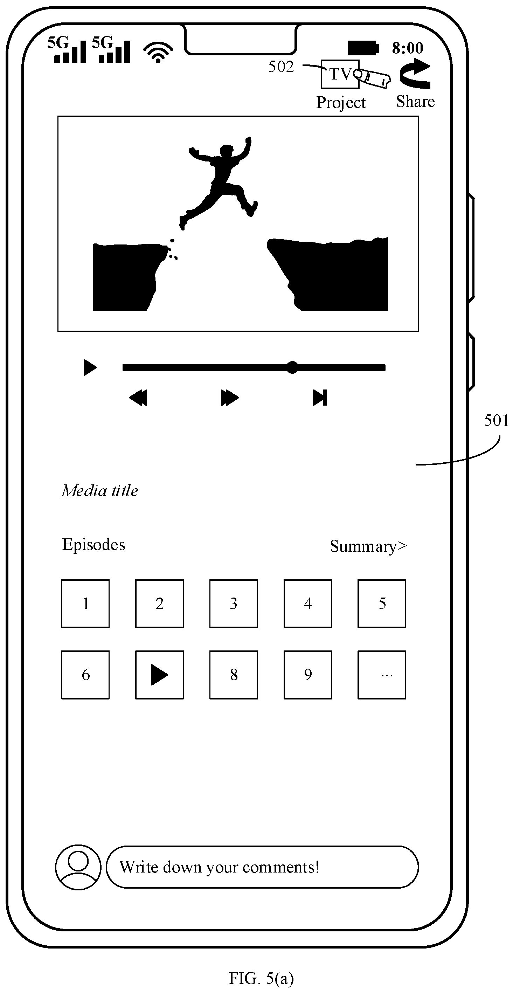

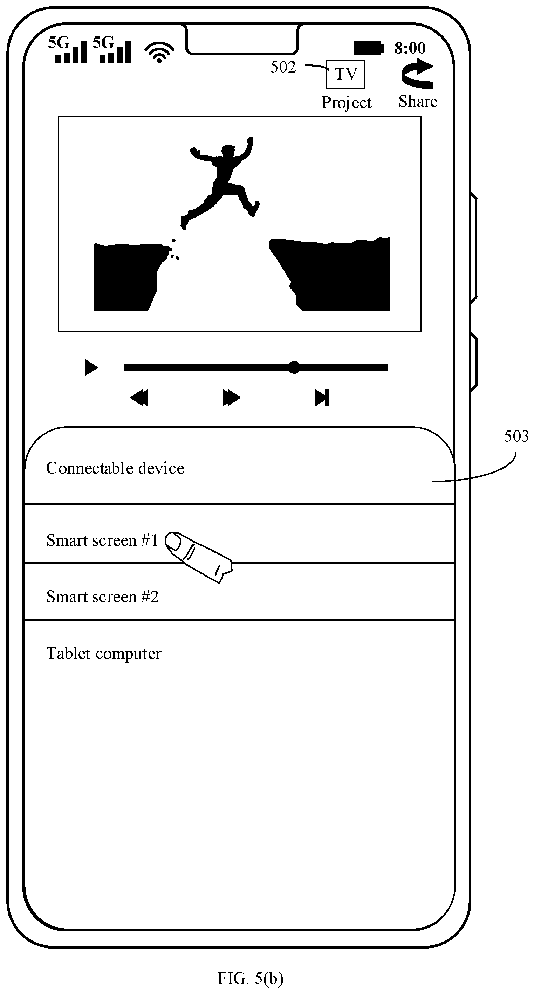

For example, FIG. 5(a) and FIG. 5(b) show a group of graphical user interfaces (graphical user interfaces, GUIs) according to an embodiment of this application. As shown in FIG. 5(b), the first electronic device displays an interface 501, and the interface 501 is a video application interface. The electronic device may display an interface 503 in response to detecting an operation of tapping a projection control 502 by a user, and the electronic device may display information about a plurality of electronic devices (for example, a smart screen #1, a smart screen #2, and a tablet computer) on the interface 503. The first electronic device determines, in response to an operation of selecting the smart screen #1 by the user on the interface 503, that the smart screen #1 is a second electronic device.

S402: The first electronic device sends a first communication request to the second electronic device, and determines whether the second electronic device is authenticated by the first electronic device.

Correspondingly, the second electronic device receives the first communication request sent by the first electronic device.

For example, as shown in FIG. 5(b), the first electronic device may send the first communication request to the second electronic device in response to detecting an operation of selecting the second electronic device by the user on the interface 503.

In some embodiments, the second electronic device may receive, through the first application, the first communication request sent by the first electronic device.

For example, the first electronic device sends a communication request to the second electronic device through a music application, a music application of the second electronic device may receive the communication request, and the music application of the first electronic device and the music application of the second electronic device are a same application.

In some other embodiments, the second electronic device may receive, through a second application, the first communication request sent by the first electronic device.

For example, the first electronic device and the second electronic device are electronic devices provided by different terminal device vendors. The first electronic device may send a communication request to the second electronic device through an album application, an album application of the second electronic device may receive the communication request, and the album application of the first electronic device and the album application of the second electronic device are not a same application.

When sending the first communication request to the second electronic device, the first electronic device may also determine whether the second electronic device has been authenticated by the first electronic device. The authentication is identity authentication. When the first electronic device determines that the second electronic device has not been authenticated by the first electronic device, S403 is performed. When the first electronic device determines that the second electronic device has been authenticated by the first electronic device, S404 is performed.

S403: The first electronic device authenticates the second electronic device in a first authentication manner.

If the first electronic device determines that the second electronic device has not been authenticated by the first electronic device, the first electronic device authenticates the second electronic device in the first authentication manner. The first authentication manner includes identity authentication and first session key negotiation. The first session key negotiation generates a first session master key. The first electronic device may encrypt data of the first application by using the first session master key, or the first electronic device may derive a new session key based on the first session master key, and encrypt the data of the first application by using the new session key.

S404: The first electronic device authenticates the second electronic device in a second authentication manner.

If the first electronic device determines that the second electronic device has been authenticated by the first electronic device, the first electronic device authenticates the second electronic device in the second authentication manner. Because identity authentication of the second electronic device has been performed by the first electronic device, the second authentication manner includes second session key negotiation and does not include identity authentication. Because the second authentication manner does not include identity authentication and the identity authentication consumes long time, time consumed for the second authentication manner is less than that consumed for the first authentication manner. The second session key negotiation may generate a second session key, and the second session key is a derived key derived from the first session master key.

It may be understood that, if the second electronic device has been authenticated by the first electronic device, the first electronic device may store the first session master key. Therefore, when the first electronic device sends the first communication request to the second electronic device through the first application, the first electronic device may derive the second session key based on the first session master key.

In this embodiment of this application, when communicating with the second electronic device, the first electronic device may select different authentication manners based on whether the second electronic device is authenticated by the first electronic device. When the second electronic device has been authenticated, the first electronic device may use an authentication manner that consumes short time, so that a communication delay can be reduced, and communication efficiency can be improved.

Optionally, in some embodiments, the second application is further installed on the first electronic device, and that the first electronic device authenticates the second electronic device in a second authentication manner in S405 includes:
When the first electronic device sends a second communication request to the second electronic device through the second application, the first electronic device authenticates the second electronic device in the second authentication manner.

Because the first electronic device has completed identity authentication of the second electronic device when sending the first communication request, when the first electronic device sends the communication request to the second electronic device through the second application, the first electronic device may still authenticate the second electronic device in the second authentication manner.

Optionally, in some embodiments, before that a first electronic device detects selection of a second electronic device on a first interface of a first application in S401, the method further includes: The first electronic device configures a first trusted relationship at a first time point, where the first electronic device is associated with the first electronic device based on the first trusted relationship.

To ensure communication security between the first electronic device and the second electronic device, the first electronic device may first configure the first trusted relationship, so that the first electronic device is associated with the second electronic device, and the communication method provided in this embodiment of this application is implemented based on the trusted relationship.

It should be noted that, for detailed descriptions of the trusted relationship, refer to the following descriptions. Details are not described herein.

Optionally, in some embodiments, that the first electronic device sends a first communication request to the second electronic device, and determines whether the second electronic device is authenticated by the first electronic device in S402 includes:
The first electronic device sends the first communication request to the second electronic device, and determines, within first duration starting from the first time point, whether the second electronic device is authenticated by the first electronic device.

The first trusted relationship configured by the first electronic device may have a validity period. The first electronic device may determine, within the first duration after the first trusted relationship is configured, whether the second electronic device is authenticated by the first electronic device. After duration is longer than the first duration, the first electronic device may not perform determining, but may authenticate the second electronic device in the first authentication manner.

That the first electronic device is associated with the second electronic device may include the following several possible implementations.

In a possible implementation, the first electronic device and the second electronic device log in to a same first account, and the first account may be an account of a terminal device vendor, for example, a Huawei account.

In a possible implementation, the first electronic device and the second electronic device log in to two different accounts that belong to a same group. For example, an account #1 and an account #2 belong to a same family group account, the first electronic device logs in to the account #1, and the second electronic device logs in to the account #2.

In a possible implementation, the first electronic device and the second electronic device are in a one-to-one binding relationship.

It should be understood that, in this embodiment of this application, only two electronic devices log in to a same first account, or log in to different accounts that belong to a same group. However, this should not be understood as a limitation on a quantity of electronic devices in this embodiment of this application. In some other embodiments, more electronic devices may alternatively log in to a same first account, or log in to different accounts that belong to a same group.

Optionally, in some embodiments, the first application is associated with the second application based on the first trusted relationship.

If the first application and the second application may log in to a same second account, the first application is associated with the second application, and the second account may be an account provided by an application provider, for example, a MeeTime account.

Optionally, in some embodiments, a third application is further installed on the first electronic device, and the first application is not associated with the third application based on the first trusted relationship; and when the first electronic device sends a third communication request to the second electronic device through the third application, the first electronic device authenticates the second electronic device in the first authentication manner.

The first electronic device and the second electronic device are configured with the first trusted relationship. Based on the first trusted relationship, the first application is associated with the second application, and the first application is not associated with the third application. Because the first application is not associated with the third application, when the first electronic device sends the third communication request to the second electronic device through the third application, an authentication result obtained when the first electronic device sends the first communication request to the second electronic device through the first application cannot be reused. In this case, the first electronic device needs to authenticate the second electronic device in the first authentication manner.

To ensure communication security between electronic devices, the electronic devices in this embodiment of this application may configure a trusted relationship before performing communication. In this embodiment of this application, the electronic devices may configure the trusted relationship through a communication manager. The communication manager may be understood as a software module built in a system. The communication manager may be located at the application layer, the application framework layer, the system library, and the kernel layer shown in FIG. 2.

The communication manager is responsible for establishing a secure communication connection between the electronic devices, receiving data transmission requests from the application layer, the application framework layer, the system library, and the kernel layer, and transmitting data in an encryption manner. Specifically, the communication manager may include the following several functions:
(1) trusted relationship management, where the communication manager is responsible for recording the trusted relationship between the electronic devices, managing an authentication identity credential, and recording a trusted relationship group;
(2) authentication and negotiation of a session key, where the communication manager may authenticate the electronic device based on the trusted relationship, and generate the session key through negotiation; and
(3) data encryption, where after generating a key, the communication manager may encrypt data from the application layer based on the session key.

The trusted relationship between the electronic devices in this embodiment of this application may be represented by using a trusted relationship table.

The trusted relationship table in this embodiment of this application may include a device identifier and one or more of the following: a trusted relationship range, a trusted relationship attribute, a trusted relationship type, and an identity credential.

For example, Table 1 shows a trusted relationship table. Table 1 is a trusted relationship table of an electronic device #1. The trusted relationship table includes a device identifier, and the device identifier indicates an electronic device that has a trusted relationship with the electronic device #1. A device identifier #1 is a device identifier of an electronic device #2, and the device identifier #2 is a device identifier of an electronic device #3. That is, the electronic device #1 has a trusted relationship with the electronic device #2 and the electronic device #3.

After the trusted relationship is configured for the electronic device #1 and the electronic device #2, it is assumed that the electronic device #2 is not authenticated by the electronic device #1. When communicating with the electronic device #2 through an application #1, the electronic device #1 may authenticate the electronic device #2 in the first authentication manner. When the electronic device #1 communicates with the electronic device #2 through an application #2, because identity authentication has been performed and the electronic device #1 has a trusted relationship with the electronic device #2, the electronic device #2 may authenticate the electronic device #2 in the second authentication manner during this time of communication.

It should be further noted that a type of the identifier of the electronic device is not limited in this embodiment of this application. For example, the identifier of the electronic device may be a device address (for example, an IP address or a MAC address), a device ID, or a device label (label) of the electronic device.

**Table 1: Trusted relationship table**

| Sequence number | Device identifier |
|---|---|
| 1 | Device identifier #1 |
| 2 | Device identifier #2 |

For example, Table 2 shows a trusted relationship table. Table 2 is a trusted relationship table of an electronic device #1. A difference from Table 1 is that Table 2 further includes a trusted relationship range, and device identifiers having a same trusted relationship range are grouped into a same group. The trusted relationship range may be understood as a range to which the trusted relationship is applicable.

For example, assuming that a device identifier #1 is a device identifier of an electronic device #2, as shown in Table 2, the electronic device #1 and the electronic device #2 are configured with a trusted relationship, the electronic device #2 belongs to a group 1, and a trusted relationship range of the group 1 is an entire system, that is, all services in the electronic device #1 and the electronic device #2 may communicate with each other based on the trusted relationship between the electronic device #1 and the electronic device #2.

For another example, assuming that a device identifier #3 is a device identifier of an electronic device #4, as shown in Table 2, the electronic device #1 and the electronic device #4 are configured with a trusted relationship, an electronic device #2 belongs to a group 2, and a range of the group 2 is an application #1 and an application #2, that is, the application #1 and the application #2 in the electronic device #1 and the electronic device #4 may communicate with each other based on the trusted relationship between the electronic device #1 and the electronic device #4, and an application #3 in the electronic device #1 and an application #3 in the electronic device #4 cannot communicate with each other based on the trusted relationship. Assuming that the electronic device #4 is not authenticated by the electronic device #1, when the electronic device #1 communicates with the electronic device #2 through the application #1, the electronic device #1 may authenticate the electronic device #2 in the first authentication manner; or when the electronic device #1 communicates with the electronic device #2 through the application #3, because the application #1 and the application #3 are not within a same trusted relationship range, the electronic device #1 still needs to authenticate the electronic device #2 in the first authentication manner when the electronic device #1 communicates with the electronic device #2 through the application #3.

**Table 2: Trusted relationship table**

| Group | Device identifier | Trusted relationship range |
|---|---|---|
| 1 | Device identifier #1 | Entire system |
| | Device identifier #2 | |
| 2 | Device identifier #3 | Application #1 and application #2 |
| | Device identifier #4 | |

For example, Table 3 shows a trusted relationship table. Table 3 is a trusted relationship table of an electronic device #1. A difference from Table 1 and Table 2 that the trusted relationship table may further include a trusted relationship attribute, and the trusted relationship attribute includes an attribute field used to describe the trusted relationship. For example, the trusted relationship attribute may include one or more of the following: an account, a trusted relationship establisher, and an account type. The account may include a system account and an application account.

For example, assuming that a device identifier #1 is a device identifier of an electronic device #2, as shown in Table 3, the electronic device #1 and the electronic device #2 are configured with a trusted relationship, the electronic device #2 belongs to a group 1, a range of the group 1 is an entire system, a trusted relationship attribute of the group 1 includes an account, and the account is a system account #1, that is, the electronic device #1 and the electronic device #2 configure the trusted relationship based on the system account #1. In other words, the electronic device #1 and the electronic device #2 log in to the system account #1, and then the electronic device #1 and the electronic device #2 configure the trusted relationship based on the system account #1. The system account #1 may be an account of a terminal device vendor, for example, a Huawei account.

For another example, assuming that a device identifier #2 is a device identifier of an electronic device #3, as shown in Table 3, the electronic device #1 and the electronic device #3 are configured with a trusted relationship, an electronic device #2 belongs to a group 2, a range of the group 2 is an application #1, a trusted relationship attribute of the group 2 includes an account, and the account is an application account #1, that is, the electronic device #1 and the electronic device #3 establish the trusted relationship based on the application account #1. In other words, the application #1 in the electronic device #1 and the application #1 in the electronic device #2 log in to the application account #1, and then the electronic device #1 and the electronic device #2 establish the trusted relationship based on the application account #1. The application account #1, for example, a MeeTime account, may be provided by an application provider.

In this embodiment of this application, the trusted relationship may be established between the electronic devices based on the system account or the application account, but this is not limited thereto. In some examples, when an application of an electronic device initiates a communication request with another electronic device, a trusted relationship may alternatively be established between the electronic devices based on only a communication request of the application without depending on a system account or an application account. In this case, a trusted relationship attribute of the trusted relationship may include a trusted relationship establisher, and the trusted relationship establisher is an application that initiates the communication request.

For example, assuming that a device identifier #3 is a device identifier of an electronic device #4, as shown in Table 3, the electronic device #1 and the electronic device #4 are configured with a trusted relationship, an electronic device #2 belongs to a group 3, a range of the group 3 is an application #2, a trusted relationship attribute of the group 3 includes a trusted relationship establisher, and the trusted relationship establisher is the application #2, that is, an application #2 in the electronic device #1 requests to establish a trusted relationship with the electronic device #4 to send data, or an application #2 in the electronic device #4 requests to establish a trusted relationship with the electronic device #1 to send data.

The trusted relationship is established between the electronic devices based on the communication request of the application. A trusted relationship range may be the application, or a trusted relationship range may be determined according to a preset rule.

For example, the trusted relationship is configured between the electronic device #1 and the electronic device #2 based on the communication request of the application #1, and the trusted relationship range is the application #1.

For another example, the trusted relationship is configured between the electronic device #1 and the electronic device #2 based on the communication request of the application #2, and a trusted relationship range is the application #1 and the application #2.

In this embodiment of this application, the trusted relationship may be established between the electronic devices based on the communication request initiated by the application, but this is not limited thereto. In some examples, the electronic device may alternatively establish a trusted relationship with another electronic device based on a communication request of the communication manager.

For example, assuming that a device identifier #4 is a device identifier of an electronic device #5, as shown in Table 3, the electronic device #1 and the electronic device #4 are configured with a trusted relationship, the electronic device #4 belongs to a group 4, a range of the group 4 is an entire system, a trusted relationship attribute of the group 4 includes a trusted relationship establisher, and the trusted relationship establisher is a communication manager, that is, a communication manager in the electronic device #1 requests to configure a trusted relationship with the electronic device #2 to send data, or a communication manager in the electronic device #2 requests to configure a trusted relationship with the electronic device #1 to send data.

**Table 3: Trusted relationship table**

| Group | Device identifier | Trusted relationship attribute | Trusted relationship range |
|---|---|---|---|
| 1 | Device identifier #1 | System account #1 | Entire system |
| 2 | Device identifier #2 | Application account #1 | Application #1 |
| 3 | Device identifier #3 | Trusted relationship establisher: application #2 | Application #2 |
| 4 | Device identifier #4 | Trusted relationship establisher: communication manager | Entire system |

In the trusted relationship table shown in Table 3, a trusted relationship attribute of each group includes one field, but this embodiment of this application is not limited thereto. In some examples, trusted relationship data of one group may include a plurality of fields.

For example, Table 4 shows a trusted relationship table. Table 4 is a trusted relationship table of an electronic device #1. A difference from Table 3 is that a trusted relationship attribute may include a plurality of fields.

For example, assuming that a device identifier #1 is a device identifier of an electronic device #2, as shown in Table 4, a trusted relationship is established between the electronic device #1 and the electronic device #2, a trusted relationship attribute of the trusted relationship includes an account and an account type, the account is a system account #1, and the account type is a system account.

For another example, assuming that a device identifier #2 is a device identifier of an electronic device #3, as shown in Table 4, a trusted relationship is established between the electronic device #1 and the electronic device #3, a trusted relationship attribute of the trusted relationship includes an account, an account type, and a trusted relationship establisher, the account is an application account #1, the account type is an application account, and the trusted relationship establisher is an application #1.

For another example, assuming that a device identifier #3 is a device identifier of an electronic device #4, as shown in Table 4, a trusted relationship is established between the electronic device #1 and the electronic device #4, a trusted relationship attribute of the trusted relationship includes a trusted relationship establisher, and the trusted relationship establisher is an application #2.

It should be noted that, although trusted relationship establishers of trusted relationship attributes of the group 2 and the group 3 are both applications, the trusted relationships are essentially different. The trusted relationship in the group 2 is established after the application #1 logs in to the application account #1, and the trusted relationship in the group 3 is established when the application #2 does not log in to the application account.

**Table 4: Trusted relationship table**

| Group | Device identifier | Trusted relationship attribute | Trusted relationship range |
|---|---|---|---|
| 1 | Device identifier #1 | Account: system account #1 | Entire system |
| | | Account type: system account | |
| 2 | Device identifier #2 | Account: application account #1 | Application #1 |
| | | Account type: application account | |
| | | Trusted relationship establisher: application #1 | |
| 3 | Device identifier #3 | Trusted relationship establisher: application #2 | Application #2 |

For example, Table 5 shows a trusted relationship table. Table 5 is a trusted relationship table of an electronic device #1. A difference from Table 3 and Table 4 is that the trusted relationship table may further include a trusted relationship type, and the trusted relationship type in this embodiment of this application may include a system-level trusted relationship, an application-level trusted relationship, and a one-to-one binding trusted relationship. The system-level trusted relationship is a trusted relationship configured based on a system account, the application-level trusted relationship is a trusted relationship established based on an application account, and the one-to-one binding trusted relationship is a trusted relationship established based on an application request or a communication manager request. In other words, the electronic device establishes the one-to-one binding trusted relationship and does not depend on a system account and an application account.

For example, assuming that a device identifier #1 is a device identifier of an electronic device #2, as shown in Table 5, the electronic device #1 and the electronic device #2 are configured with a trusted relationship, and the trusted relationship is configured based on a system account #1, that is, the trusted relationship type is the system-level trusted relationship.

For another example, assuming that a device identifier #2 is a device identifier of an electronic device #3, as shown in Table 5, the electronic device #1 and the electronic device #3 are configured with a trusted relationship, and the trusted relationship is configured based on an application account #1, that is, the trusted relationship type is the application-level trusted relationship.

For another example, assuming that a device identifier #3 is a device identifier of an electronic device #4, as shown in Table 5, the electronic device #1 and the electronic device #4 are configured with a trusted relationship, and the trusted relationship is configured based on a request of an application #2, that is, the trusted relationship type is the one-to-one binding trusted relationship.

For another example, assuming that a device identifier #4 is a device identifier of an electronic device #5, as shown in Table 5, the electronic device #1 and the electronic device #4 are configured with a trusted relationship, the trusted relationship is configured based on a communication manager, and the trusted relationship type is the one-to-one binding trusted relationship.

**Table 5: Trusted relationship table**

| Group | Trusted relationship type | Device identifier | Trusted relationship attribute | Trusted relationship range |
|---|---|---|---|---|
| 1 | System level | Device identifier #1 | System account #1 | Entire system |
| 2 | Application level | Device identifier #2 | Application account #1 | Application #1 |
| 3 | One-to-one binding | Device identifier #3 | Trusted relationship establisher: application #2 | Application #2 |
| 4 | One-to-one binding | Device identifier #4 | Trusted relationship establisher: communication manager | Entire system |

For example, Table 6 shows a trusted relationship table. Table 6 is a trusted relationship table of an electronic device #1. A difference from Table 5 is that the trusted relationship table may further include an identity credential. The identity credential is used for identity authentication during communication of the electronic device, and the identity credential may be a symmetric key, or may be an asymmetric key.

For example, assuming that a device identifier #1 is a device identifier of an electronic device #2, as shown in Table 6, the electronic device #1 and the electronic device #2 are configured with a trusted relationship, a credential corresponding to the device identifier #1 is an identity credential #1, and the identity credential #1 may be generated by the electronic device #2, or may be generated by a server and then issued to the electronic device #1.

**Table 6: Trusted relationship table**

| Group | Trusted relationship type | Device identifier | Trusted relationship attribute | Identity credential | Trusted relationship range |
|---|---|---|---|---|---|
| 1 | System level | Device identifier #1 | System account #1 | Identity credential #1 | Entire system |
| 2 | Application level | Device identifier #2 | Application account #1 | Identity credential #2 | Application #1 |
| 3 | One-to-one binding | Device identifier #3 | Trusted relationship establisher: application #2 | Identity credential #3 | Application #2 |
| 4 | One-to-one binding | Device identifier #4 | Trusted relationship establisher: communication manager | Identity credential #4 | Entire system |

It should be noted that the foregoing describes, with reference to Table 1 to Table 6, the trusted relationship table provided in this embodiment of this application as an example, but should not be understood as a limitation on the trusted relationship table provided in this embodiment of this application. In this embodiment of this application, any arrangement and combination may be performed based on the device identifier and one or more of the trusted relationship range, the trusted relationship attribute, the trusted relationship type, and the identity credential, to obtain different trusted relationship tables.

The foregoing describes the trusted relationship table of the electronic device, and the following describes in detail the method for establishing the trusted relationship by the electronic device.

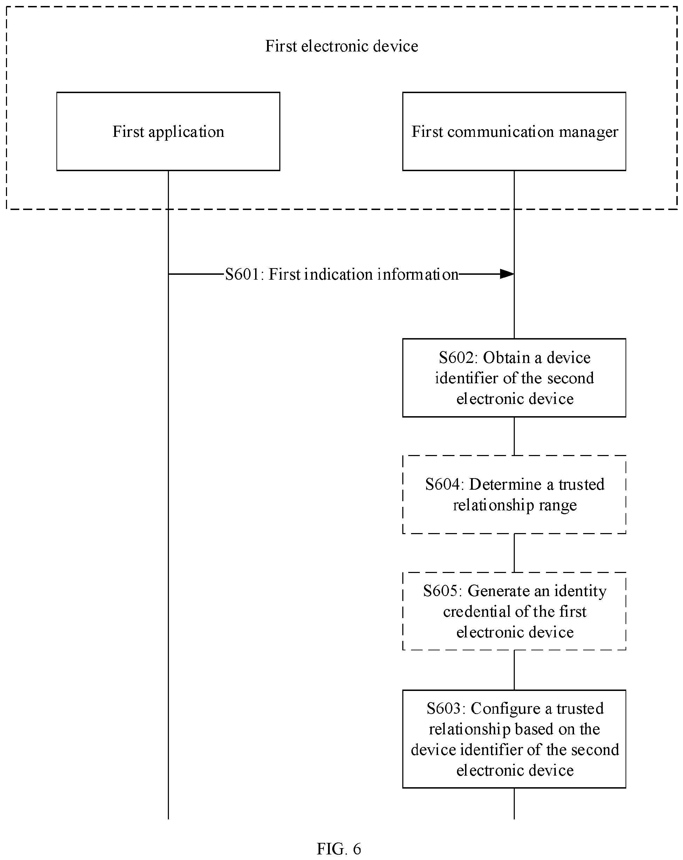

FIG. 6 is a schematic flowchart of a method for configuring a trusted relationship by an electronic device according to an embodiment of this application. The method is applied to a first electronic device, and the first electronic device includes a first application and a first communication manager. As shown in FIG. 6, the method includes the following steps.

S601: The first application sends first indication information to the first communication manager.

In some embodiments, when logging in to a first account, the first application may send the first indication information to the first communication manager. The first indication information indicates the communication manager to configure a trusted relationship. The first account may be a system account, namely, an account of a terminal device vendor, for example, a Huawei account.

In some embodiments, the first application of the first electronic device has logged in to the first account. When detecting that a first application of the second electronic device logs in to the first account, the first application of the first electronic device may send the first indication information to the first communication manager.

In some embodiments, when logging in to a second account, the first application of the first electronic device may send the first indication information to the first communication manager. The first indication information indicates the communication manager to configure the trusted relationship. The second account may be an application account, namely, an account provided by an application provider, for example, a MeeTime account.

In some embodiments, the first application of the first electronic device has logged in to the second account. When detecting that a first application of the second electronic device logs in to the second account, the first application of the first electronic device may send the first indication information to the first communication manager.

For example, the first application is a music application, and the music application of the first electronic device has logged in to an account #1. When the music application of the first electronic device detects that a music application of the second electronic device also logs in to the account #1, the music application of the first electronic device may send the first indication information to the first communication manager.

Further, in some embodiments, the first application has logged in to the second account, and the second account is associated with the first application. When detecting that the first application of the second electronic device logs in to the second account for the first time, the first application may send the first indication information to the first communication manager.

In some embodiments, the first application of the first electronic device has logged in to a third account. When detecting that the first application of the second electronic device logs in to a fourth account, the first application of the first electronic device may send the first indication information to the first communication manager. The third account and the fourth account are different accounts belonging to a same group.

In some embodiments, the first application is an application of the first electronic device. When detecting an operation of binding the first application to the second electronic device by a user, the first application sends the first indication information to the first communication manager. That the first application of the first electronic device is bound to the second electronic device may be understood as that the first application of the first electronic device establishes a connection relationship with the second electronic device to send data.

It should be noted that binding the first application of the first electronic device to the second electronic device does not depend on whether the first application of the first electronic device logs in to an account.

For example, FIG. 5(a) and FIG. 5(b) show a group of GUIs provided in this embodiment of this application. As shown in FIG. 5(a), the first application is a video application, the first electronic device displays an interface 501, the interface 501 is a playback interface of the video application, and the interface 501 includes a projection control 502. In response to detecting that the user taps the projection control 502, a GUI shown in FIG. 5(b) may be displayed. As shown in FIG. 5(b), the first electronic device may display an option box 503, and the option box 503 includes electronic devices, for example, a smart screen #1, a smart screen #2, and a tablet computer, that can be connected to the first electronic device. In response to detecting an operation of tapping a control of the smart screen #1 by the user, the first electronic device may project, to the smart screen #1, a video played by the video application. That is, it may be understood as that the video application of the first electronic device is bound to the smart screen #1.

S602: The first communication manager obtains a device identifier of the second electronic device.

In some embodiments, after receiving the first indication information, the first communication manager may obtain the device identifier of the second electronic device.

The first communication manager may obtain the device identifier of the second electronic device in the following several possible manners:
In a possible implementation, the first communication manager may obtain the device identifier of the second electronic device from a server.

The first application of the first electronic device may sense, through the server of the first application, that the first application of the second electronic device logs in to the first account, so that the server corresponding to the first application may send the device identifier of the second electronic device to the first communication manager.

In a possible implementation, the first communication manager may obtain the device identifier of the second electronic device from the second electronic device. For example, the first electronic device is connected to the second electronic device by using a near field communication technology, and the first communication manager may obtain the device identifier of the second electronic device from the second electronic device.

For example, as shown in FIG. 5(a) and FIG. 5(b), before the first electronic device projects the video of the video application to the smart screen #1, the first communication manager may first obtain a device identifier of the smart screen #1.

S603: The first communication manager configures the trusted relationship based on the device identifier of the second electronic device.

After obtaining the device identifier of the second electronic device, the first communication manager may establish the trusted relationship based on the device identifier. The trusted relationship configured by the first communication manager based on the device identifier of the second electronic device may be represented by using a trusted relationship table similar to that shown in Table 1.

In some embodiments, before the first communication manager configures the trusted relationship based on the device identifier of the second electronic device in S603, the method further includes:
S604: The first communication manager determines a trusted relationship range.

In some embodiments, the first communication manager may determine the trusted relationship range based on an account type.

For example, the first account is a system account, and the trusted relationship range is an entire system.

For example, the second account is an application account, and the trusted relationship range is an application corresponding to the second account.

For example, the electronic device may determine the trusted relationship range according to a first preset rule, and the first preset rule indicates a correspondence between an account and a trusted relationship range.

For example, Table 7 shows a correspondence table between an account and a trusted relationship range. As shown in Table 7, when the account is a system account, and the system account is a system account #1, the trusted relationship range is an entire system; or when the account is a system account, and the system account is a system account #2, the trusted relationship range is an application #1 and an application #2; or when the account is an application account, and the application account is an application account #1, the trusted relationship range is an application corresponding to the application account #1; or when the account is an application account, and the application is an application account #2, the trusted relationship range is an application #3 and an application #4.

**Table 7 Correspondence table between an account and a trusted relationship range**

| Account type | Account | Range |
|---|---|---|
| System account | System account #1 | Entire system |
| System account | System account #2 | Application #1 and application #2 |
| Application account | Application account #1 | Application corresponding to the application account #1 |
| Application account | Application account #2 | Application #3 and application #4 |

In some embodiments, when the first communication manager receives the first indication information sent by the first application, and the first indication information is sent when the first application detects the operation of binding the first application to the second electronic device by the user, the first communication manager may determine the trusted relationship range according to a second preset rule, and the second preset rule indicates a correspondence between an application and a trusted relationship range.

For example, Table 8 shows a correspondence table between an application and a trusted relationship range. As shown in Table 8, when receiving an operation of binding an application #1 to the second electronic device by the user, the application #1 sends the first indication information, and after receiving the first indication information, the first communication manager may determine that the trusted relationship range is an entire system; or when receiving an operation of binding an application #2 to the second electronic device by the user, the application #2 sends the first indication information, and after receiving the first indication information, the first communication manager may determine that the trusted relationship range is the application #2; or when receiving an operation of binding an application #3 to the second electronic device by the user, the application #3 sends the first indication information, and after receiving the first indication information, the first communication manager may determine that the trusted relationship range is an application #3 and an application #4.

**Table 8 Correspondence table between an account and a trusted relationship range**

| Application | Range |
|---|---|
| Application #1 | Entire system |
| Application #2 | Application #2 |
| Application #3 | Application #3 and application #4 |

It should be noted that there is no actual execution sequence between S602 and S604. S602 may be performed before S604, or S604 may be performed before S602, or S602 and S604 may be simultaneously performed.

It may be understood that, after the first communication manager performs S602 and S604, the trusted relationship configured by the first communication manager based on the device ID of the second electronic device may be represented by using a trusted relationship table similar to that shown in Table 2.

In some embodiments, the trusted relationship established by the first communication management server based on the device identifier of the second electronic device may be represented by using a trusted relationship table similar to that shown in Table 3, Table 4, or Table 5.

In some embodiments, before the communication manager configures the trusted relationship based on the device identifier of the second electronic device in S603, the method further includes:
S605: The first communication manager generates an identity credential of the first electronic device.

In some embodiments, the first communication manager may generate the identity credential of the first electronic device, and the identity credential of the first electronic device is used to verify the first electronic device. After the first communication manager generates the identity credential of the first electronic device, the server may prove a belonging relationship of the identity credential of the first electronic device, that is, the server determines a correspondence between the identity credential of the first electronic device and the first electronic device.

In some embodiments, that the first communication manager generates the identity credential of the first electronic device in S605 may be replaced with that the first communication manager receives the identity credential, of the first electronic device, that is sent by the server.

When the first communication manager establishes the trusted relationship, the server may generate the identity credential of the first electronic device, and then send the identity credential of the first electronic device to the first communication manager.

In some embodiments, that the first communication manager obtains the device identifier of the second electronic device in S602 includes:
The first communication manager obtains the device identifier of the second electronic device and an identity credential of the second electronic device.

The second electronic device may also generate the identity credential of the second electronic device, so that the first communication manager may further obtain the identity credential of the second electronic device when obtaining the device identifier of the second electronic device.

In some embodiments, that the first communication manager configures the trusted relationship based on the device identifier of the second electronic device in S603 includes:
The first communication manager establishes the trusted relationship based on the device identifier of the second electronic device and the identity credential of the second electronic device.

After obtaining the device ID of the second electronic device and the credential of the second electronic device, the first communication manager may configure the trusted relationship. The trusted relationship may be represented by using a trusted relationship table similar to that shown in Table 6.

The foregoing mainly describes, with reference to FIG. 4, that the application of the electronic device sends the indication information to the communication manager to establish the trusted relationship, but this embodiment of this application is not limited thereto. In some other embodiments, the trusted relationship may be established between the electronic devices through the communication manager. For example, the first electronic device and the second electronic device are located in a same communication network, the first electronic device may configure the trusted relationship with the second electronic device in response to an operation of associating the user with the second electronic device. A type of the trusted relationship is one-to-one binding, and a trusted relationship establisher is the communication manager.

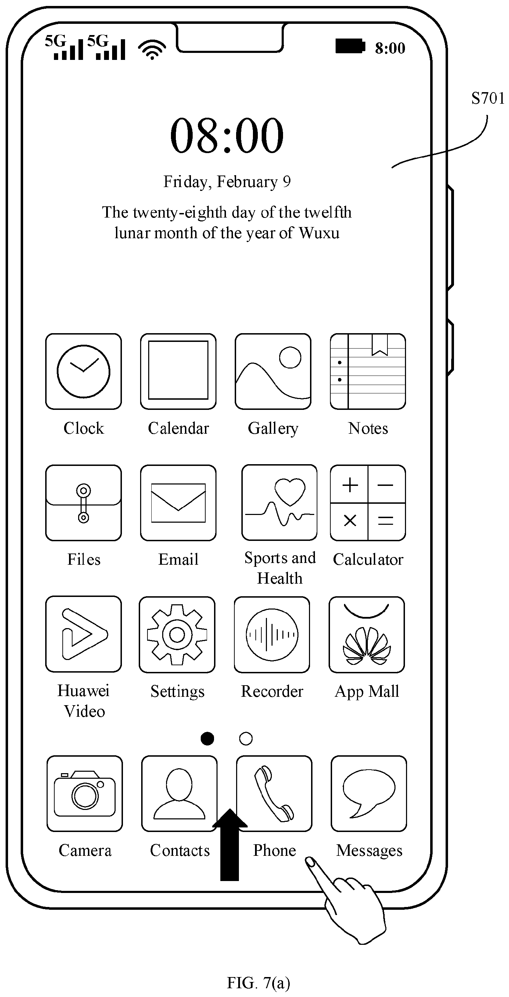

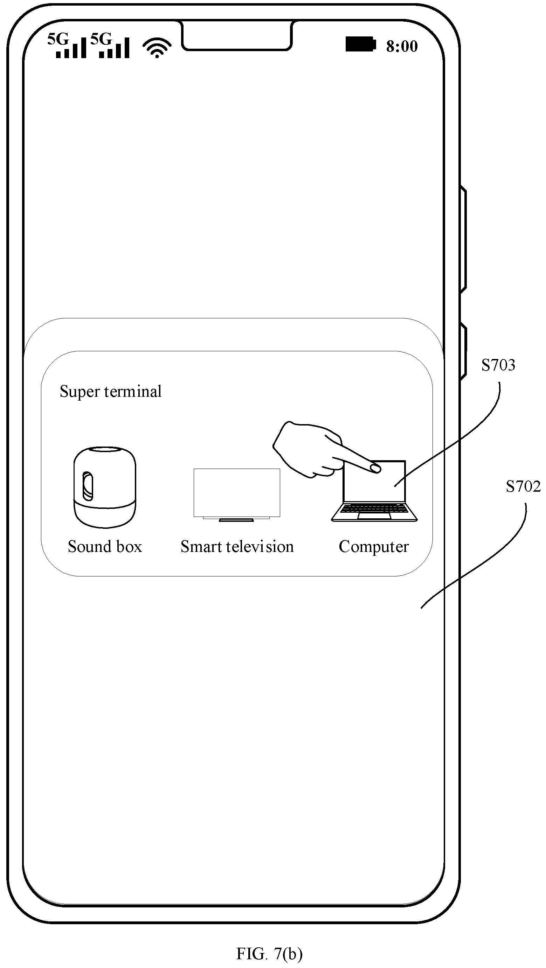

For example, in a group of GUIs shown in FIG. 7(a) and FIG. 7(b), the first electronic device displays an interface 701, and the interface 701 may be a desktop. The first electronic device may display an interface 702 in response to an operation of sliding upward at an edge of a screen by the user. The interface 702 may be a control center interface. When displaying the interface 702, the first electronic device may broadcast a query message by using a wireless communication function, to search for an electronic device located in a same communication network as the first electronic device, for example, an electronic device located in a same Wi-Fi network. After finding the electronic device that is located in the same communication network as the first electronic device, the first electronic device may display the electronic device on the interface 702. In response to detecting an operation of tapping a control 703 by the user, the first electronic device may configure a trusted relationship with an electronic device corresponding to the control 703, that is, configure a trusted relationship between the first electronic device and a computer.

For another example, both the first electronic device and the second electronic device log in to a same first account, and the first account is a system account, namely, an account provided by a terminal device vendor.

For another example, the first electronic device and the second electronic device log in to different accounts that belong to a same group. For example, the first electronic device logs in to a third account, the second electronic device logs in to a fourth account, and the third account and the fourth account belong to an account of a same family group.

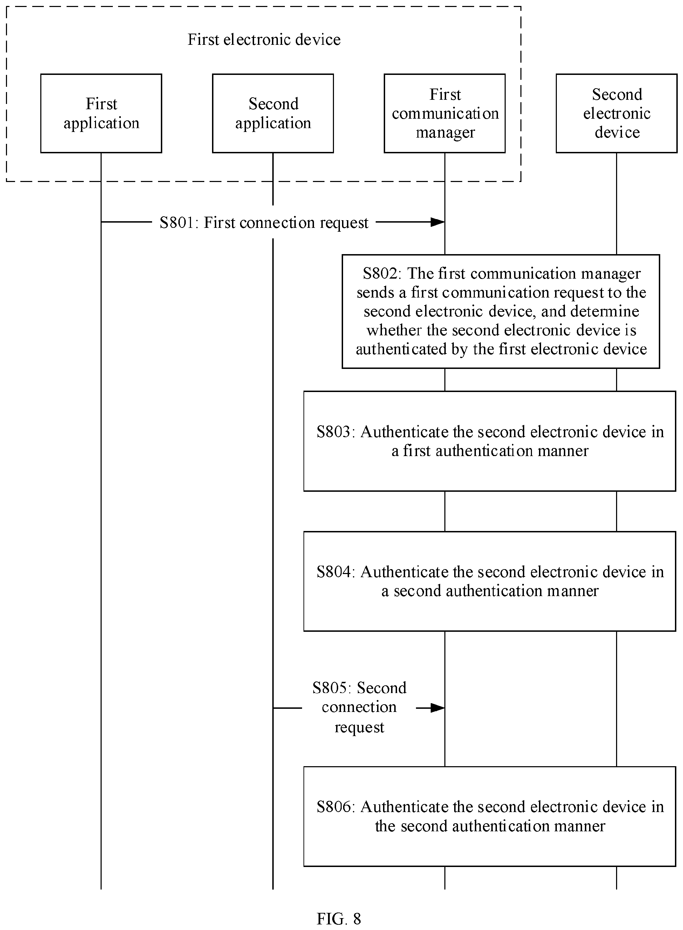

The foregoing describes the method for configuring the trusted relationship by the electronic device. The following describes, with reference to FIG. 8, an internal data flow direction of a communication method provided in embodiments of this application.

FIG. 8 is a schematic flowchart of a communication method 800 according to an embodiment of this application.

S801: A first application sends a first connection request to a first communication manager.

Correspondingly, the first communication manager receives the first connection request sent by the first application, where the first connection request includes a device identifier of a second electronic device and first data, and the first data is to-be-sent data.

The first application detects selection of a user for the second electronic device on a first interface of the first application, and may send the first connection request to the first communication manager.

For example, as shown in FIG. 5(b), assuming that the second electronic device is a smart screen #1, the first application may send the first connection request to the first communication manager in response to detecting an operation of selecting the second electronic device by the user.

S802: The first communication manager sends a first communication request to the second electronic device, and determines whether the second electronic device is authenticated by the first electronic device.

After receiving the first connection request, the first communication manager determines, based on the device identifier of the second electronic device, to send the first communication request to the second electronic device, and determines, when sending the first communication request, whether the second electronic device is authenticated by the first electronic device. When the first communication manager determines that the second electronic device has not been authenticated by the first electronic device, S803 is performed. When the first communication manager determines that the second electronic device has been authenticated by the first electronic device, S804 is performed.

For example, a flag bit may be set for the first communication manager, and the flag bit identifies whether the second electronic device is authenticated by the first electronic device. When receiving the first connection request sent by the first application, the first communication manager may check the flag bit to determine whether the second electronic device is authenticated by the first electronic device.

In this embodiment of this application, a manner of sending the first communication request is not limited. For example, the first communication manager may send the first communication request to the second electronic device through a Bluetooth channel, or the first communication manager may send the first communication request to the second electronic device through a Wi-Fi channel.

S803: The first communication manager authenticates the second electronic device in a first authentication manner.

If the first communication manager determines that the second electronic device has not been authenticated by the first electronic device, the first communication manager authenticates the second electronic device in the first authentication manner. The first authentication manner includes identity authentication and first session key negotiation.

The first communication manager may initiate identity authentication on the second electronic device in the following several manners:
In a possible implementation, the first communication manager initiates identity authentication on the second electronic device based on the device identifier of the second electronic device.

In a possible implementation, the first communication manager initiates identity authentication on the second electronic device based on an identity credential of the second electronic device.

When performing first session key negotiation, the first communication manager may generate a first session master key.

It should be noted that a key negotiation algorithm is not limited in this embodiment of this application. For example, the algorithm may be an RSA-based key negotiation algorithm, a DH-based key negotiation algorithm, or the like.

S804: The first communication manager authenticates the second electronic device in a second authentication manner.

If the first communication manager determines that the second electronic device has been authenticated by the first electronic device, the first communication manager authenticates the second electronic device in the second authentication manner. The second authentication manner includes second session key negotiation and does not include identity authentication.

When performing second session key negotiation, the first communication manager may generate a second session master key, and the second session key is a derived key derived from the first session master key.

It should be noted that a derivation algorithm is not limited in this embodiment of this application. For example, the derivation algorithm may be a derivation algorithm such as HKDF or NIST 800-108KDF.

According to the communication method provided in this embodiment of this application, after identity authentication is completed between the electronic devices, when the application initiates communication, the electronic devices do not need to perform identity authentication again, and only need to perform key negotiation. This can reduce a communication delay, and improve communication efficiency.

Optionally, in some embodiments, a second application is installed on the first electronic device, and the method further includes:
S805: The second application sends a second connection request to the first communication manager.

Correspondingly, the first communication manager receives the second connection request sent by the second application, where the second connection request includes the device identifier of the second electronic device and second data, and the second data is to-be-sent data.

S806: The first communication manager sends a second communication request, and authenticates the second electronic device in the second authentication manner.

Because the first communication manager has authenticated the second electronic device in the first authentication manner when sending the first communication request, the first communication manager may authenticate the second electronic device in the second authentication manner when sending the second communication request.

According to the communication method provided in this embodiment of this application, after identity authentication is completed between the electronic devices, when a plurality of applications initiate communication, the electronic devices do not need to perform identity authentication again, and only need to perform key negotiation. This can reduce a communication delay, and improve communication efficiency.

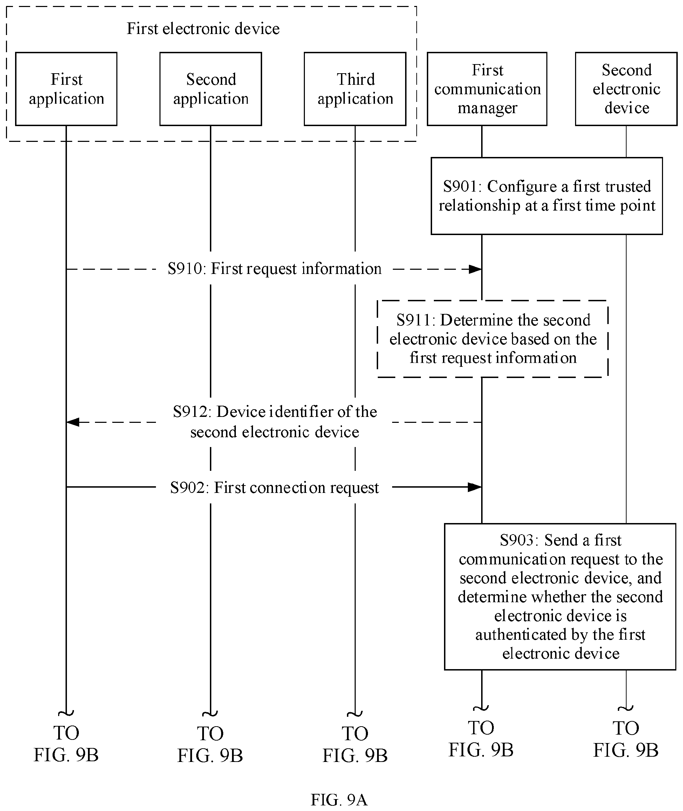

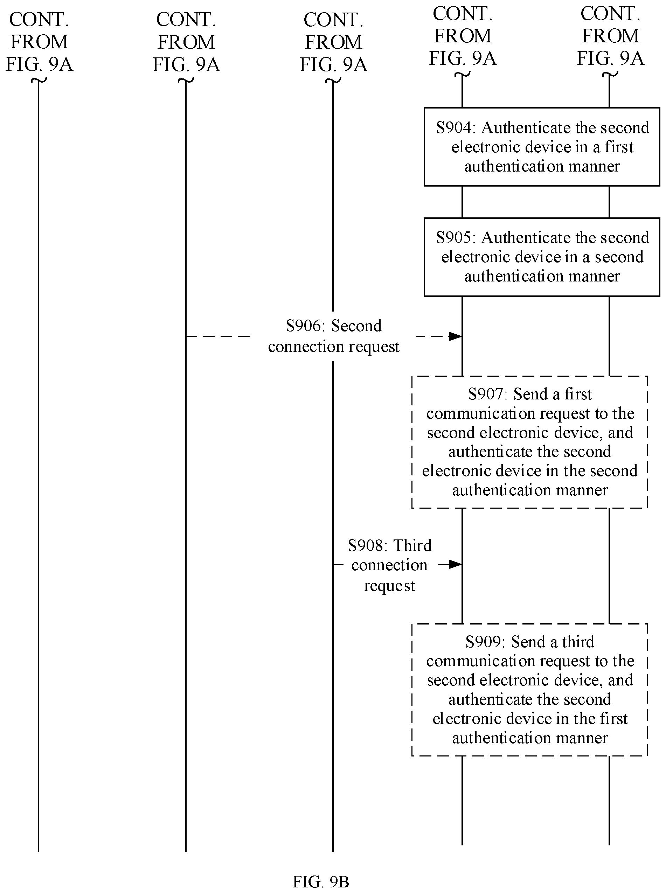

FIG. 9A and FIG. 9B are a schematic flowchart of a communication method 900 according to an embodiment of this application. The method is applied to a first electronic device, and a first application is installed on the first electronic device. As shown in FIG. 9A and FIG. 9B, the method includes the following steps.

S901: A first communication manager configures a first trusted relationship at a first time point.

For example, the first communication manager configures the first trusted relationship when the first electronic device and a second electronic device log in to a same first account.

For example, the first communication manager configures the first trusted relationship when the first electronic device and a second electronic device log in to two different accounts that belong to a same group.

For example, the first communication manager configures the first trusted relationship when the first electronic device and a second electronic device are in a one-to-one binding relationship.

S902: The first application sends a first connection request to the first communication manager.

S903: The first communication manager sends a first communication request to the second electronic device, and determines whether the second electronic device is authenticated by the first electronic device.

S904: The first communication manager authenticates the second electronic device in a first authentication manner.

S905: The first communication manager authenticates the second electronic device in a second authentication manner.

It should be noted that, for descriptions of S902 to S905, refer to the foregoing descriptions of S801 to S804. For brevity, details are not described herein again.

According to the communication method provided in this embodiment of this application, after identity authentication is completed between the electronic devices, when the application initiates communication, the electronic devices do not need to perform identity authentication again, and only need to perform key negotiation. This can reduce a communication delay, and improve communication efficiency.

Optionally, in some embodiments, that the first communication manager sends a first communication request to the second electronic device, and determines whether the second electronic device is authenticated by the first electronic device in S903 includes:
The first communication manager sends the first communication request to the second electronic device, and determines, within first duration starting from the first time point, whether the second electronic device is authenticated by the first electronic device.

Optionally, in some embodiments, a second application is installed on the first electronic device, the first application is associated with the second application based on the first trusted relationship, and the method further includes: S906: The second application sends a second connection request to the first communication manager.

Correspondingly, the first communication manager receives the second connection request sent by the second application, where the second connection request includes a device identifier of the second electronic device and second data, and the second data is to-be-sent data.

S907: The first communication manager sends a second communication request, and authenticates the second electronic device in the second authentication manner.

Because the first application is associated with the second application, and the first communication manager has authenticated the second electronic device when sending the first communication request, the first communication manager may authenticate the second electronic device in the second authentication manner when sending the second communication request.

Optionally, in some embodiments, a third application is installed on the first electronic device, the first application is not associated with the third application based on the first trusted relationship, and the method further includes:
S908: The third application sends a third connection request to the first communication manager.

Correspondingly, the first communication manager receives the third connection request sent by the third application, where the third connection request includes the device identifier of the second electronic device and third data, and the third data is to-be-sent data.

S909: The first communication manager sends a third communication request, and authenticates the second electronic device in the first authentication manner.

Because the first application is not associated with the third application, the second electronic device has been authenticated by the first electronic device, and the first communication manager still needs to authenticate the second electronic device in the first authentication manner when sending the third communication request.

According to the communication method provided in this embodiment of this application, the trusted relationship may be configured between the electronic devices, so that when the first electronic device initiates communication through the application within a trusted relationship range, identity authentication does not need to be performed on the second electronic device for a plurality of times, and this can reduce a communication delay, and improve communication efficiency; or when the first electronic device initiates communication through an application outside the trusted relationship range, identity authentication still needs to be performed on the second electronic device, and this ensures communication security.

Optionally, in some embodiments, before that the first application sends a first connection request to the first communication manager in S902, the method further includes:
S910: The first application sends first request information to the first communication manager.

Correspondingly, the first communication manager receives the first request information sent by the first application.

The first application may send the first request information to the first communication manager in response to a user communication operation.

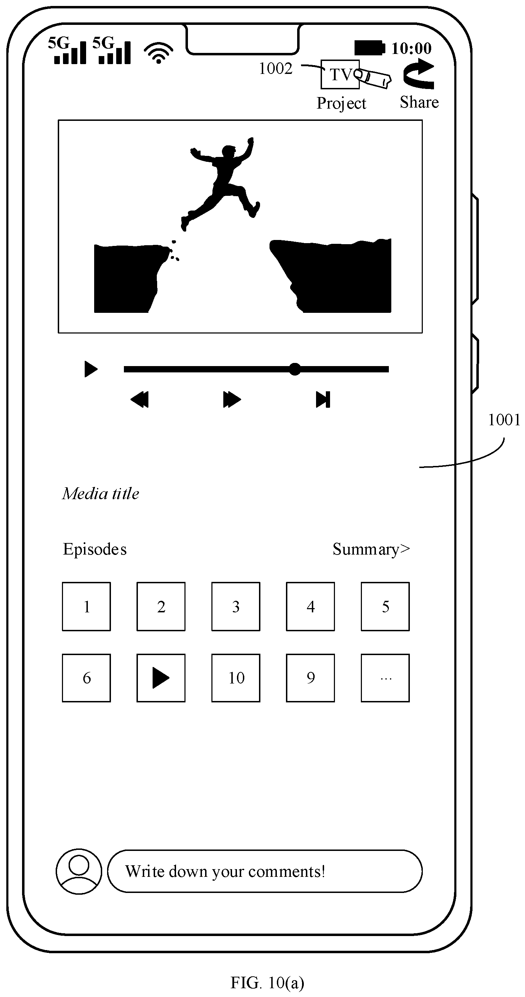

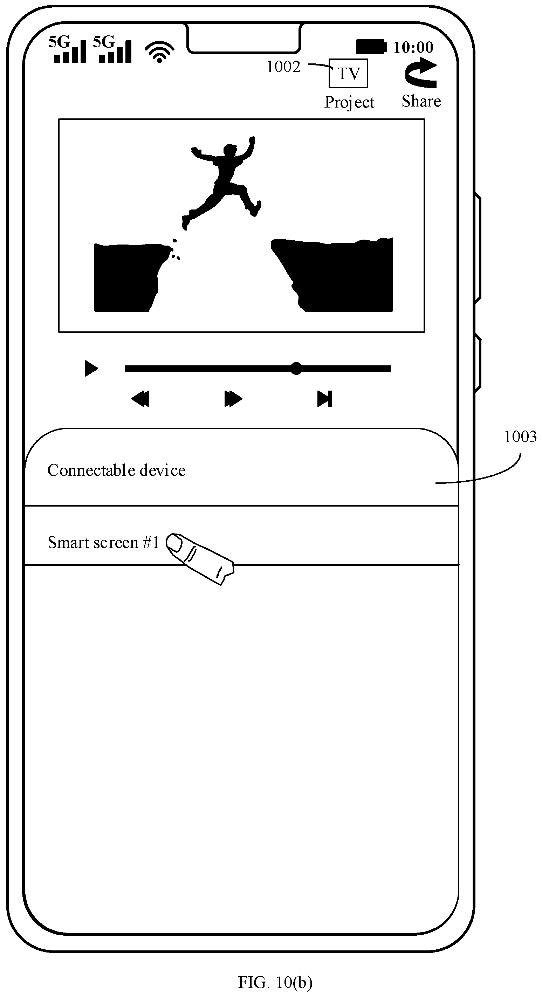

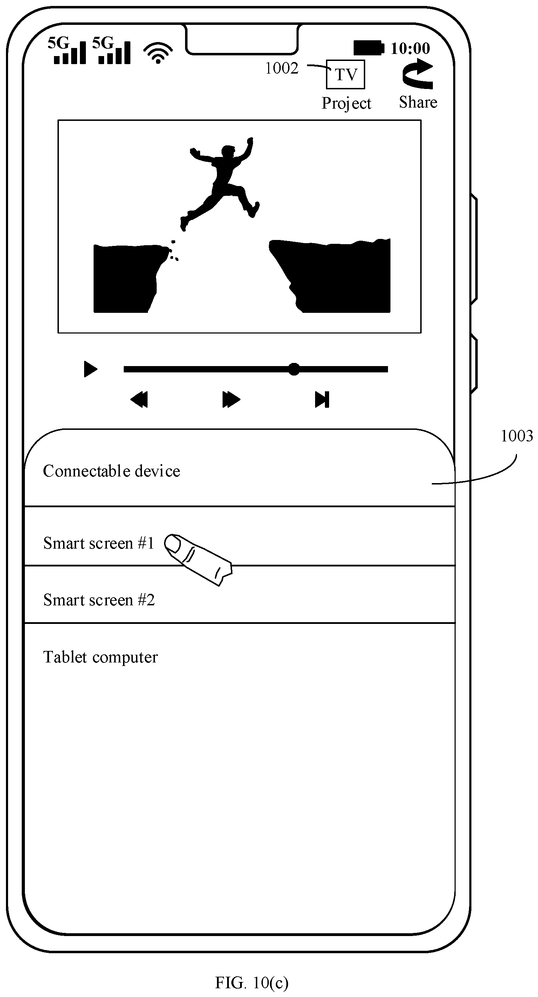

For example, assuming that the first application is a video application, for example, a GUI shown in FIG. 10(a), and an interface 1001 is a playback interface of the first application, when detecting that a user taps a projection control 1002, the first application may send the first request information to the first communication manager.

S911: The first communication manager determines the second electronic device based on the first request information.

After receiving the first request information, the first communication manager may determine the second electronic device based on the first request information. The second electronic device and the first electronic device are configured with the first trusted relationship at the first time point, and the trusted relationship range of the first trusted relationship includes the first application.

For example, Table 9 shows a trusted relationship table of the first electronic device. Assuming that a device identifier #1 is the device identifier of the second electronic device, it may be learned from Table 9 that a first trusted relationship is established between the first electronic device and the second electronic device. Because a trusted relationship range is not limited in the first trusted relationship, it may be understood as that the first trusted relationship is applicable to an entire system, so that the trusted relationship range of the first trusted relationship includes the first application. After receiving communication request information of the first application, the first communication manager may determine the second electronic device based on the trusted relationship table.

**Table 9: Trusted relationship table**

| Sequence number | Device identifier |
|---|---|
| 1 | Device identifier #1 |

For another example, the trusted relationship table of the first electronic device may include a trusted relationship range. Table 10 shows the trusted relationship table of the first electronic device. Assuming that a device identifier #1 is the device identifier of the second electronic device, and a device identifier #2 is a device identifier of the third electronic device, it may be learned from Table 10 that a first trusted relationship is established between the first electronic device and the second electronic device, and a second trusted relationship is established between the first electronic device and the second electronic device. A trusted relationship range of the first trusted relationship includes the first application and the second application, and a trusted relationship range of the second trusted relationship includes the third application. In this case, after receiving communication request information of the first application, the first communication manager may determine the second electronic device based on the trusted relationship table.

**Table 10: Trusted relationship table**

| Group | Device identifier | Trusted relationship range |
|---|---|---|
| 1 | Device identifier #1 | First application and second application |
| 2 | Device identifier #2 | Third application |

Optionally, in some embodiments, that the first communication manager determines the second electronic device based on the first request information in S911 includes: The first communication manager determines a plurality of electronic devices based on the first request information, where the plurality of electronic devices include the second electronic device.

After receiving the first request information, the first communication manager may determine the plurality of electronic devices based on the first request information. The plurality of electronic devices include the second electronic device, the plurality of electronic devices and the first electronic device are configured with trusted relationships, and a trusted relationship range of each trusted relationship includes the first application.

For example, Table 11 shows a trusted relationship table of the first electronic device. Assuming that a device identifier #1 is the device identifier of the second electronic device, a device identifier #2 is a device identifier of a third electronic device, and a device identifier #3 is a device identifier of a fourth electronic device, it may be learned from Table 11 that the first electronic device and the second electronic device are configured with a first trusted relationship, the first electronic device and the second electronic device are configured with a second trusted relationship, and the first electronic device and the third electronic device are configured with a third trusted relationship. A trusted relationship range of the first trusted relationship includes the first application and the second application, a trusted relationship range of the second trusted relationship includes the third application, and a trusted relationship range of the third trusted relationship is an entire system, that is, includes the first application. In this case, after receiving communication request information of the first application, the first communication manager may determine the second electronic device and the fourth electronic device based on the trusted relationship table.

**Table 11: Trusted relationship table**

| Group | Device identifier | Trusted relationship range |
|---|---|---|
| 1 | Device identifier #1 | First application and second application |
| 2 | Device identifier #2 | Third application |
| 3 | Device identifier #3 | Entire system |

S912: The first communication manager sends the device identifier of the second electronic device to the first application.

Correspondingly, the first application receives the device identifier of the second electronic device sent by the first communication manager.

After determining the second electronic device based on the first request information, the first communication manager may send the device identifier of the second electronic device to the first application.

Optionally, in some embodiments, that the first communication manager sends the device identifier of the second electronic device to the first application in S912 includes:
The first communication manager sends a plurality of device identifiers to the first application, where the plurality of device identifiers include the device identifier of the second electronic device.

After determining the plurality of electronic devices based on the first request information, the first communication manager may send, to the first application, the device identifiers corresponding to the plurality of electronic devices.

According to the communication method provided in this embodiment of this application, after identity authentication is completed between the electronic devices, when the plurality of applications within the trusted relationship range initiate communication, identity authentication does not need to be performed again between the electronic devices.

The foregoing mainly describes the communication method provided in embodiments of this application from a perspective of an electronic device. It may be understood that, to implement the foregoing functions, the electronic device and the server include corresponding hardware structures and/or software modules for performing the functions. A person skilled in the art should easily be aware that, in combination with algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional modules of the processor of the electronic device may be performed based on the foregoing method examples. For example, each functional module corresponding to each function may be obtained through division, or two or more functions may be integrated into one processing module. The integrated module may be implemented in a form of hardware, or may be implemented in a form of a software functional module.

It should be noted that all or some of any features in embodiments of this application may be freely combined without introducing a contradiction. The combined technical solutions also fall within the scope of this application.

An embodiment of this application further provides an electronic device. The electronic device includes a processor, a memory, an application, and a computer program. The foregoing components may be connected through one or more communication buses. One or more computer programs are stored in the memory and are configured to be executed by one or more processors. The one or more computer programs include instructions, and the instructions may be used to enable the electronic device to perform the steps of the electronic device in the foregoing embodiments.

For example, the processor may be specifically the processor 110 shown in FIG. 1, and the memory may be specifically the internal memory 120 shown in FIG. 1 and/or the external memory connected to the electronic device.

An embodiment of this application further provides a chip. The chip includes a processor and a communication interface. The communication interface is configured to receive a signal and transmit the signal to the processor, and the processor processes the signal, so that the communication method in any one of the foregoing possible implementations is performed.

An embodiment further provides a computer-readable storage medium. The computer-readable storage medium stores computer instructions. When the computer instructions are run on an electronic device, the electronic device is enabled to perform the foregoing related method steps, to implement the communication method in the foregoing embodiments.

An embodiment further provides a computer program product. When the computer program product is run on a computer, the computer is enabled to perform the foregoing related steps, to implement the communication method in the foregoing embodiments.

According to the context, the term "when" or "after" used in the foregoing embodiments may be interpreted as a meaning of "if" or "after" or "in response to determining" or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a first electronic device, a first application is installed on the first electronic device, and the method comprises:
detecting selection of a second electronic device on a first interface of the first application;
sending, by the first electronic device, a first communication request to the second electronic device through the first application, and determining whether the second electronic device is authenticated by the first electronic device in response to the selection; and
if the second electronic device is not authenticated by the first electronic device, authenticating, by the first electronic device, the second electronic device in a first authentication manner; or
if the second electronic device has been authenticated by the first electronic device, authenticating, by the first electronic device, the second electronic device in a second authentication manner, wherein
time consumed for the first authentication manner is greater than time consumed for the second authentication manner.

2. The method according to claim 1, wherein, a second application is installed on the first electronic device, and the authenticating, by the first electronic device, the second electronic device in a second authentication manner comprises:
when the first electronic device sends a second communication request to the second electronic device through the second application, authenticating, by the first electronic device, the second electronic device in the second authentication manner.

3. The method according to claim 2, wherein before the detecting selection of a second electronic device on a first interface of the first application, the method comprises:
configuring, by the first electronic device, a first trusted relationship at a first time point, wherein the first electronic device is associated with the second electronic device based on the first trusted relationship.

4. The method according to claim 3, wherein that the first electronic device is associated with the second electronic device comprises:
the first electronic device and the second electronic device log in to a same first account; or
the first electronic device and the second electronic device log in to two different accounts that belong to a same group; or
the first electronic device and the second electronic device are in a one-to-one binding relationship.

5. The method according to claim 3, wherein the first application is associated with the second application based on the first trusted relationship.

6. The method according to claim 5, wherein a third application is installed on the first electronic device, and the first application is not associated with the third application based on the first trusted relationship; and
when the first electronic device sends a third communication request to the second electronic device through the third application, the first electronic device authenticates the second electronic device in the first authentication manner.

7. The method according to any one of claims 3 to 6, wherein the sending, by the first electronic device, a first communication request to the second electronic device through the first application, and determining whether the second electronic device is authenticated by the first electronic device in response to the selection comprises:
sending, by the first electronic device, the first communication request to the second electronic device through the first application, and determining, within first duration starting from the first time point, whether the second electronic device is authenticated by the first electronic device in response to the selection.

8. The method according to any one of claims 1 to 7, wherein the first authentication manner comprises first session key negotiation and identity authentication, the second authentication manner comprises second session key negotiation but does not comprise identity authentication, and time consumed for the second session key negotiation is less than time consumed for the first session key negotiation.

9. The method according to claim 8, wherein the first session key negotiation generates a first session master key, the second session key negotiation generates a second session key, and the second session key is a derived key derived from the first session master key.

10. The method according to claim 3, wherein the first application and the second application both log in to a same second account.

11. A communication method, wherein the method is applied to a second electronic device, and the method comprises:
receiving a first communication request from a first electronic device, wherein the first communication request is associated with a first application;
in response to the first communication request, determining whether the second electronic device is authenticated by the first electronic device; and
if the second electronic device is not authenticated by the first electronic device, accepting, by the second electronic device, authentication of the first electronic device in a first authentication manner; or
if the second electronic device has been authenticated by the first electronic device, accepting, by the second electronic device, authentication of the first electronic device in a second authentication manner, wherein
time consumed for the first authentication manner is greater than time consumed for the second authentication manner.

12. The method according to claim 11, wherein the receiving a first communication request from a first electronic device comprises:
receiving, by the first application of the second electronic device, the first communication request; or
receiving, by a second application of the second electronic device, the first communication request.

13. The method according to claim 11 or 12, wherein the accepting, by the second electronic device, authentication of the first electronic device in a second authentication manner comprises:
receiving a second communication request from the first electronic device, wherein the second electronic device accepts authentication of the first electronic device in the second authentication manner, and the second communication request is associated with the second application.

14. The method according to claim 13, wherein the method further comprises:
receiving, at a first time point, a first trusted relationship configured by the first electronic device, wherein the first electronic device is associated with the second electronic device based on the first trusted relationship.

15. The method according to claim 14, wherein that the first electronic device is associated with the second electronic device comprises:
the first electronic device and the second electronic device log in to a same first account; or
the first electronic device and the second electronic device log in to two different accounts that belong to a same group; or
the first electronic device and the second electronic device are in a one-to-one binding relationship.

16. The method according to claim 14, wherein the first application is associated with the second application based on the first trusted relationship.

17. The method according to claim 16, wherein the first application is not associated with a third application based on the first trusted relationship, and the method further comprises:
receiving a third communication request from the first electronic device, wherein the second electronic device accepts authentication of the first electronic device in the first authentication manner, and the third communication request is associated with the third application.

18. The method according to any one of claims 11 to 17, wherein the first authentication manner comprises first session key negotiation and identity authentication, the second authentication manner comprises second session key negotiation but does not comprise identity authentication, and time consumed for the second session key negotiation is less than time consumed for the first session key negotiation.

19. The method according to claim 18, wherein the first session key negotiation generates a first session master key, the second session key negotiation generates a second session key, and the second session key is a derived key derived from the first session master key.

20. The method according to claim 14, wherein the first application and the second application both log in to a same second account.

21. A communication system, wherein the communication system comprises a first electronic device and a second electronic device, the first electronic device is configured to perform the method according to any one of claims 1 to 10, and the second electronic device is configured to perform the method according to any one of claims 11 to 20.

22. An electronic device, comprising one or more processors and one or more memories, wherein the one or more memories store one or more computer programs, and the one or more computer programs comprise instructions; and when the instructions are executed by the one or more processors, the method according to any one of claims 1 to 10 or the method according to any one of claims 11 to 20 is performed.

23. A chip, wherein the chip comprises a processor and a communication interface, the communication interface is configured to receive a signal and transmit the signal to the processor, and the processor processes the signal, so that the method according to any one of claims 1 to 10 or the method according to any one of claims 11 to 20 is performed.

24. A computer-readable storage medium, wherein the computer-readable storage medium stores computer instructions; and when the computer instructions are run on a computer, the method according to any one of claims 1 to 10 or the method according to any one of claims 11 to 20 is performed.

25. A computer program product comprising instructions, wherein when the computer program product is run on a computer, the computer is enabled to perform the method according to any one of claims 1 to 10 or the method according to any one of claims 11 to 20.
